# DEMANDE DE BREVET EUROPEEN

(11) **EP 2 743 079 A1**
(43) Date de publication de la demande: **18.06.2014**
(21) Numéro de dépôt: 12364005.4
(22) Date de dépôt: 09.10.2012
(51) Int. Cl.: B32B 9/02, B65D 85/00, A47G 19/00

(54) **Stratifié de feuillage végétal alimentaire biodégradable notamment pour la fabrication de récipients.**

(30) Priorité: 11.10.2011 FR 1103094
(71) Demandeur: Boulard, Yves, 35000 Rennes (FR); Belisaire, Daniel, 35800 Dinard (FR); Ecole Nationale Supérieure de Chimie de Rennes, 35708 Rennes Cedex 7 (FR); Université de Rennes 1, 35065 Rennes Cedex (FR)
(72) Inventeur: Belisaire, Daniel, 35800 Dinard (FR); Boulard, Yves, 35000 Rennes (FR); Audic, Jean Luc, 35160 Montfort / Meu (FR)

(57) **Abrégé**

La présente invention concerne un composite de matière feuilletée, permettant de fabriquer des récipients biodégradables à usage alimentaire constitués d'une pluralité de couches stratifiées de galettes de feuilles végétales, liées entre elles suivant certaines dispositions, dont les couches sont alternées avec des films de colle également alimentaire servant de liant, constituant un ensemble compact de feuillages ayant une certaine rigidité, qui assurent une étanchéité aux substances semi liquides dans les récipients, et ceci selon un procédé de formage à chaud par compression, permettant ainsi de réaliser des récipients de toutes sortes, pouvant revêtir des formes diverses en fonction de leur usage.

## Description

Domaine : La présente invention concerne un matériau stratifié, végétal et biodégradable, compatible avec des applications alimentaires, et en particulier permettant de fabriquer des récipients.

**Etat de la Technique :** dans le domaine des matériaux multicouches biodégradables, on trouve des matières premières telles que le bois, le papier, et en autre le papier kraft, et certains végétaux comme le bambou ou la feuille de palm, objet entre autre du brevet FR2947205, dont le stratifié est à base de papier. Ces matières nécessitent une culture spécifique et un abattage des végétaux producteurs. Les matières appelées biodégradables le sont, selon des procédés industriels, où il est indispensable de monter en température, ce qui les rend non biodégradables dans un cadre de compost domestique. D'autres matériaux destinés également à la fabrication des barquettes : tels que le polypropylène, le polystyrène expansé, ou le PVC n'ont aucune aptitude à une dégradation naturelle bactérienne. Il est connu des contenants à balle de riz, et de fibres végétales pulvérisées, à base de mélamine modifiée, et ceux à paille de riz, épis de maïs, et coquilles d'arachide, ou autres matériaux tels que décrit dans le brevet CN1487009. Une autre méthode est décrite dans le brevet TW496818 où le stratifié, à base de fibre de riz, et d'un liant nécessite un transfert dans un presseur, opération longue et délicate. D'autres procédés de formage par pression et cuisson avec prétraitement des composants font l'objet du brevet CN1231866.

Beaucoup de matériaux biodégradables sont cassants, tels que ceux à base d'acide poly lactique. De plus pour rendre ces composites étanches à l'eau il est souvent nécessaire de les associer à des résines, dont la mise en oeuvre s'avère délicate. Certains agro matériaux se trouvent mélangés dans des rapports de matière sèche importants, ce qui entraine une viscosité très élevée, rendant difficile leur mise en oeuvre. D'autre part, d'autre colle à base d'amidon, à haute viscosité, avec des matières solides, d'environ 30%, présente l'inconvénient, d'avoir un faible pouvoir collant. Dans la plupart des applications, ces colles demandent une préparation, afin d'améliorer le collage. Celles-ci consistent à utiliser des agents de dégraissage, solvant alcalin, ou autre.

Il est couramment réalisé des films fabriqués à partir d'alcool, et de colle de poissons, ou les colle amidon, comprenant du carbonate de calcium, tel que dans le modèle d'utilité CN218622. En règle générale les films sont utilisés pour l'emballage, parfois dans le conditionnement, et rarement dans la composition d'un matériau.
Il existe également des composites, obtenus par moulage, par injection, qui mettent en oeuvre des techniques complexes d'outillages, à des coûts très onéreux, tel que dans le brevet FR2947205.

**Moyens généraux de l'invention :** le matériau de base, objet de l'invention, présente l'avantage de nécessiter aucune culture spécifique, ni aucun abattage. Le « sal » est un arbre très commun en Asie du sud, poussant naturellement. Il est très présent dans les forêts, et sert généralement de bois de charpente. Les feuilles de cet arbre, tombent du mois de février au mois d'avril. Il y a simplement à ramasser les feuilles, ce sont des feuilles mortes. Les récipients, telles que les barquettes constitués par ces feuilles, peuvent être compostées avec des procédés domestiques simples, sans montée en température, sans incinération. Dans l'invention du stratifié, l'inter calage d'un film de lécithine de soja et de ses protéines, assure la fonction de liant collant, associé à l'amidon de riz. Afin de pallier l'éventuel manque de rigidité, il a été ajouté dans le film de la poudre d'écorce de pin. Les colles utilisées comme liant entre des feuilles de bois ou de papier, présentent l'inconvénient d'un manque d'imperméabilité, principalement à chaud.
Dans le stratifié qui fait l'objet de cette invention, les rapports de matières sèche par l'adjonction de lécithine de soja dans la proportion de 5 à 15%, apporte une hydrophilisation propice à l'étanchéité aux liquides, avec un temps de gommage pratiquement nul, et ceci grâce à l'accélération donnée dans le temps, par le poinçon chauffant, lors de la mise en forme de la galette. Par ailleurs, l'apport d'écorce de pin de 5 à 15%, a pour but de rigidifier le produit fini après séchage, ainsi que les 15 à 25% de lipides telle que l'huile de palm qui permettent entre autre de fluidifier la mouture. L'apport d'amidon de riz de 10 à 20%, et les protéines de soja de 5 à 15%, soit dans leur ensemble de 15 à 35% de matière seiche, constitue la base de la colle.

Ce film de colle peut être un élément rapporté en lui même, à caractère filmogène, ou appliqué par enduit ou badigeonnage, avec un grammage correspondant à la quantité de colle étalée de l'ordre de 10 à 30 grammes au m² de masse adhésive.

Dans la gamme des liants filmogènes entrant dans le stratifié de l'invention, le film est un polymère biodégradable et ou compostable, éventuellement biosourcé appartenant aux familles de polymères tels que les polyesters aliphatiques aromatiques, les polyhydroxyalkanoates, les protéines et les polysaccharides. Ces polymères peuvent être : PBAT/ amidon ; polyoléfine oxobiodégradable ; PBAT-NaCAS Lactafilm® ; polyester PCL+amidon de type MaterBi®,; de la cellulose ; PBS. La nature et la qualité des polymères retenus pour cette invention de stratifié sont prioriairement biosourcés et biodégradables, comme des protéines (caséines du lait : Lactafilm® formulé selon le brevet n°10/02815), des polysaccharides (cellulose, amidons) ou des huiles et graisses. Les polymères peuvent être biodégradables ou compostables, de la famille des polyesters aliphatiques aromatiques : polybutylène adipate-co-terephtalate PBAT, polybutylène succinate PBS, Polycaprolactone PCL, d'origine bactérienne : polyhydroxyalkanoates. Les matériaux polymères filmogènes utilisés entre les feuilles végétales peuvent aussi être constitués d'un mélange de polymères comme le mélange polyester-amidon (MaterBi®, Novamont), le mélange caséine-poly(butylene adipate-co-terephtalate) du Lactafilm breveté, ou le Bioplast ® de chez Sphere® (mélange PBAT/amidon). Les polymères utilisés entre les feuilles végétales peuvent aussi être eux même multicouches et être composés en partie ou totalement des polymères cités précédemment, comme les films multicouches Innoviafilms® constitués en partie de cellulose (grades NK et NVS).
L'opération de thermo-fusionl entraine parfois, pour certains films une coloration brunâtre des récipients. Contrairement, le polymère PBAT- NaCAS, n'est pas endommagé lors de l'opération de thermo-fusion, ce qui lui permet de garder sa transparence. Les récipients, ainsi constitués présentent l'avantage de pouvoir être pris en mains, dans leur usage, bénéficiant des qualités d'isolation thermique du stratifié.
Selon la présente invention, la constitution d'une couche de feuilles, est réalisée par le recouvrement de l'une sur l'autre d'environ 25 à 30%. La quantité de feuilles nécessaire pour réaliser une couche, est directement proportionnelle à la surface de la couche à réaliser, correspondant à celle du récipient déployé. La galette ainsi formée, est renforcée afin de parfaire sa compacité, par l'entre laçage de certaines feuilles, assuré par des bâtonnets sous la forme d'aiguilles de bambou, ou de nem, d'une longueur d'environ 1.5, à 3 cm selon la dimension des feuilles. Il est également possible d'assurer la liaison de l'entre laçage des feuilles par un fil de couture.

L'assemblage des feuilles de sal (1), prévu selon l'invention, répartit la charge de rupture, réalisé par les joints de recouvrement, obtenus par l'entre laçage des feuilles, et leur superposition. Après quoi ces galettes sont entreposées, et entassées les unes sur les autres pour éviter les déformations. Le stratifié va ainsi se constitué au cours de la fabrication du récipient, par la succession de couches successives de galettes, et de films de liant à caractère filmogène, qui pourront également être obtenus par badigeonnage. Les galettes peuvent également être immergées dans une solution liquide servant de liant, qui seront ensuite estampée à chaud.
Le film dans son état originel, peut être scellé par thermo-fusion, à la partie supérieure du récipient stratifié. Dans ce cas il sert de couvercle préservant les aliments qu'il est susceptible de contenir.
C'est le procédé d'estampage qui va réaliser cette structure de matériau compact, par l'intermédiaire d'un poinçon chauffant de l'ordre de 120° centigrade, provoquant une thermo diffusion, par compression et repoussage de la surface de la galette supérieure reposant sur la matrice de forme. L'estampage est réalisé en une ou plusieurs opérations selon le nombre de couches de galette ou de film. Dans une autre configuration de réalisation de ce stratifié, il sera disposé selon la nécessité requise, une simple feuille de « sal » entre deux galettes. Cette feuille assure à la fois le rôle de capsule d'étanchéité, et de renfort du fond de récipient, ce qui évite les effets de concentration de contraintes. Le profil du poinçon peut former des nervures sur le contour du récipient, renforçant sa rigidité.

### Description :

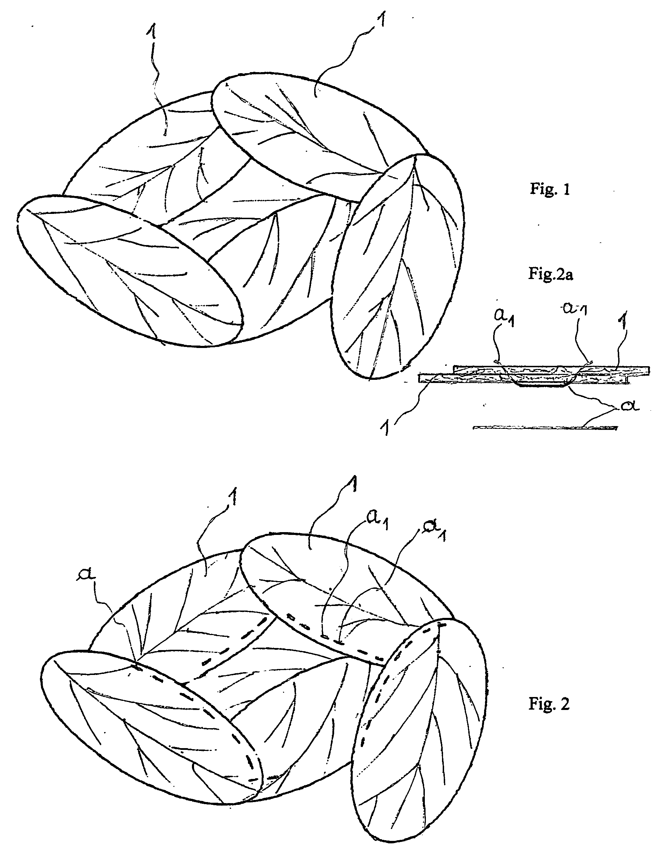

La figure 1, est une vue représentant la superposition des feuilles (1), selon au moins une feuille (1) l'une sur l'autre.

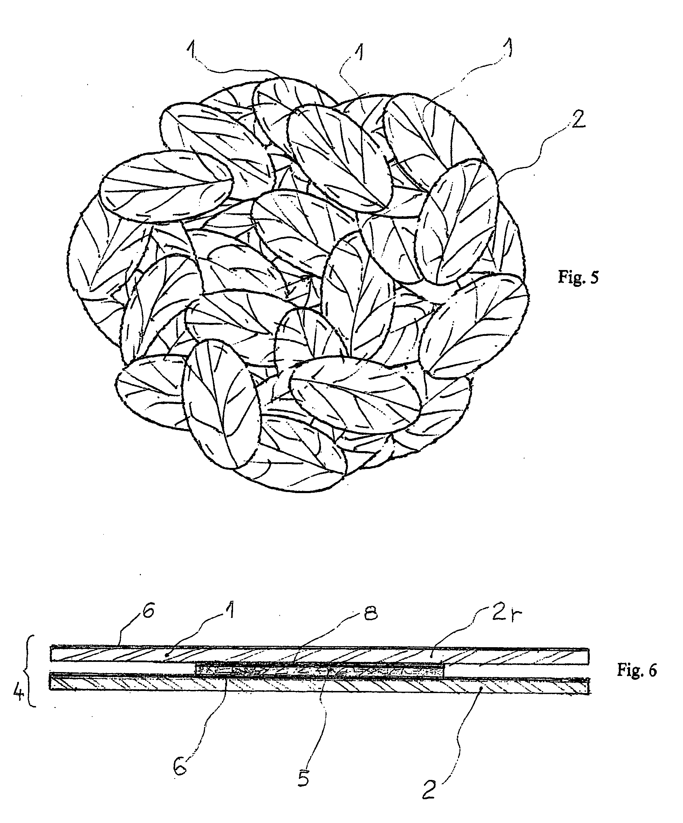

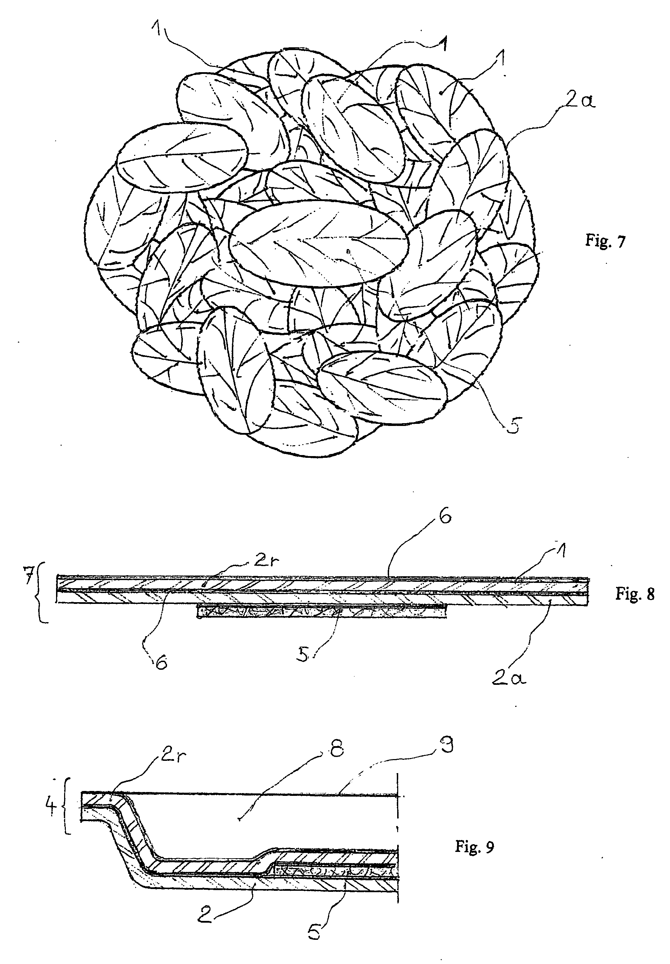

La figure 2, est une vue représentant l'agrafage des feuilles (1) par l'intermédiaire des bâtonnets (a), figure (2a), qui assurent leur assemblage, pour former la galette (2), figure 5 et 7.

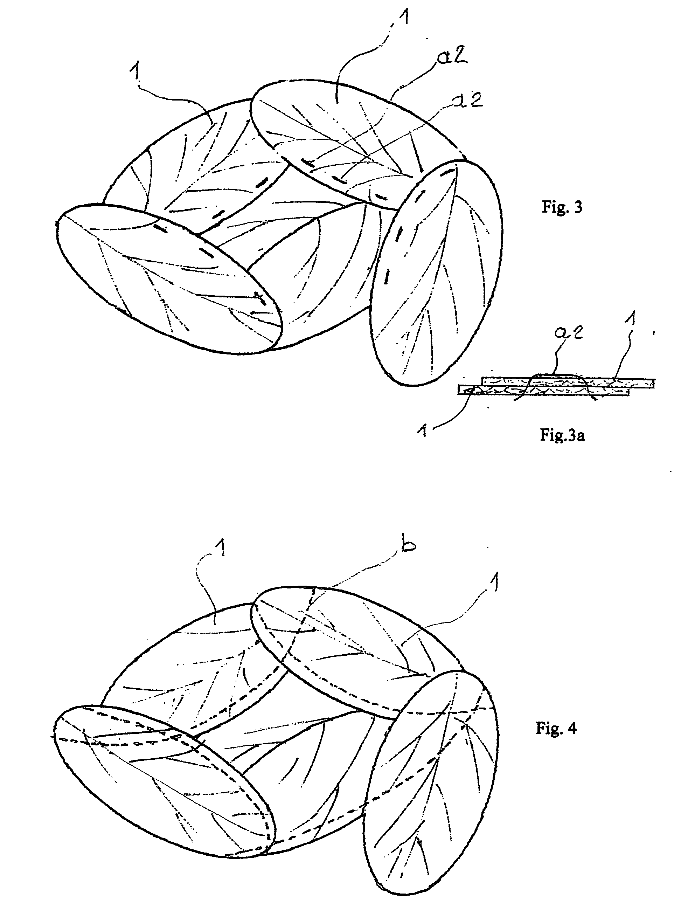

La figure 3, est une vue représentant l'envers de l'agrafage des feuilles (1) du côté bombé (a2) des bâtonnets (a), ceux-ci, ne présentant plus leurs extrémités agressives (a1) des figures (2) et (2a). Ce qui correspond à la figure (2) retournée.
La figure 4, est une vue représentant les feuilles de « sal » (1), reliées entre elles par une couture, avec un fil de coton (b).
La figure 5, est une vue représentant la galette (2), par sa pluralité de feuilles de sal (1).
La figure 6, est une vue en coupe du stratifié (4), dont la galette de feuilles (2), est recouverte d'un élément filmogène de liant (6), sur lequel est disposé une feuille de sal (5), celle-ci renforce l'étanchéité et supporte les concentrations de contraintes. Sa surface supérieure est badigeonnée d'un film (8), sur lequel vient adhérer une galette (2r) sur laquelle un second film (6), unifie la surface du récipient figure 9.
La figure 7, est une vue représentant la galette (2), composée de ses feuilles de sal (1) formant la galette (2a), avec au centre une feuille disposée en forme de capsule (5), dans le cas de la figure 8.
La figure 8, est une vue en coupe du stratifié (7) dont les couches de feuilles (1) formant les galettes (2a) et (2r), sont rendues solidaire par l'élément filmogène formant liant (6). La galette supérieure (2r), étant présentée telle que selon la figure (3). Une feuille capsule (5) est placée sous la galette (2) pour supporter les concentrations de contraintes dues au formage par poinçonnage. Un second film (6), est disposé sur le dessus de la galette 2r, pour unifier sa surface.
La figure 9, est une vue en demi coupe, représentant le récipient (8), après sa mise en forme par estampage à chaud, suivant le stratifié (4), représenté sur la figure(6), recouvert d'un film (9) scellé par thermo fusion, réalisant la fonction de couvercle, selon l'usage.

## Revendications

1. Stratifié de feuillage végétal alimentaire biodégradable, notamment pour la fabrication de récipients, **caractérisé en ce qu'**il est constitué d'une pluralité de couches de végétaux, composées de feuilles rendues solidaires sous forme de galettes, les feuilles étant entrelacées les unes aux autres, les galettes ainsi formées étant encollées avec un liant végétal, au moins une feuille simple ou un film d'étanchéité inséré entre au moins deux couches, assurant l'étanchéité de l'ensemble.

2. Stratifié végétal selon la revendication 1, **caractérisé en ce que** les végétaux utilisés sont des feuilles de sal.

3. Stratifié selon la revendication 2, **caractérisé en ce que** les feuilles de sal formant galettes, sont assemblées par des petits bâtonnets de bambou ou de nem, les agrafant les unes aux autres.

4. Stratifié selon l'une des revendications 2 ou 3, **caractérisé en ce que** les feuilles de sal formant galettes, sont cousues avec un fil végétal.

5. Stratifié selon l'une des revendications 3, **caractérisé en ce que** la première galette se trouvant au dessus est disposée et collée à l'envers, afin que les agrafes ne soient pas blessante, et détériorées.

6. Stratifié selon l'une des revendications 1, 2 3, **caractérisé en ce que** la galette placée à la partie supérieure est rendue étanche par un film appliqué sur le dessus par thermo pression.

7. Stratifié selon la revendication 1, **caractérisé en ce que** les moyens d'encollage sont constitués d'un coproduit filmogène hydrophilisé, protéiné et azoté, comprenant des matières sèches dont les poids se répartissent pour les principales de la manière suivante :
_Protéines d'amidon de riz : entre 10 et 20%
_Protéine de soja : entre 5 et 15%
_Ecorce de pin : entre 5 et 15%
_Lécithine de soja : entre 5 et 15%
_Lipides de palme : entre 15 et 25%

8. Stratifié de feuillage végétal selon la revendication 1 **caractérisé en ce que** le film est un polymère biodégradable et ou compostable éventuellement biosourcé appartenant aux familles de polymères tels que les polyesters aliphatiques aromatiques, les polyhydroxyalkanoates, les protéines et les polysaccharides.

9. Stratifié selon la revendication 8, **caractérisés en ce que** ces polymères peuvent être : PBAT/ amidon ; polyoléfine oxobiodégradable ; PBAT-NaCAS (Lactafilm®); polyester PCL+amidon de type MaterBi®, ; Cellulose ; PBS.

10. Stratifié selon la revendication 9 **caractérisé en ce que** les polymères utilisés entre les feuilles végétales peuvent aussi être eux même multicouches et être composés en partie ou totalement des polymères cités précédemment, comme les films multicouches Innoviafilms® constitués en partie de cellulose (grades NK et NVS).

11. Stratifié selon la revendication 1, **caractérisé en ce que** les galettes peuvent également être immergées dans une solution liquide servant de liant.

12. Stratifié selon la revendication 9, **caractérisé en ce que** le polymère PBAT-NaCAS, n'est pas endommagé lors de l'opération de thermo-fusion,

13. Stratifié, selon la revendication 1, **caractérisés en ce que** le film dans son état originel, peut être scellé par thermo-fusion, à la partie supérieure du récipient stratifié.

14. Stratifié pour récipient selon la revendication 1, **caractérisé en ce que** film d'étanchéité est constitué d'au moins une feuille de sal simple, formant capsule d'étanchéité, et renfort de concentration de contrainte.

15. Récipient formé d"un stratifié selon l'une quelconque des revendications 1 à 12, **caractérisé en ce qu'**il a été embouti à chaud, et qu'il peut revêtir des formes diverses.
